# EUROPÄISCHE PATENTSCHRIFT

(11) **EP 3 485 772 B1**
(45) Veröffentlichungstag und Bekanntmachung des Hinweises auf die Patenterteilung: **15.04.2020**
(21) Anmeldenummer: 17202097.6
(22) Anmeldetag: 16.11.2017
(51) Int. Cl.: A47J 43/046, A47J 27/00, A23G 1/18, A23G 1/00, A23G 1/10

(54) **SCHOKOLADENMASCHINE**
CHOCOLATE MACHINE
MACHINE À CHOCOLAT

(43) Veröffentlichungstag der Anmeldung: 22.05.2019
(73) Patentinhaber: Vorwerk & Co. Interholding GmbH, 42270 Wuppertal (DE)
(72) Erfinder: Stolze, Svenja, 91583 Schillingsfürst (DE); Stach, Christiane, 42477 Radevormwald (DE); Kraut-Reinkober, Stefan, 51375 Leverkusen (DE)
(74) Vertreter: Gille Hrabal

(56) Entgegenhaltungen:
- WO-A1-2016/165454
- WO-A2-02/13622
- DE-A1-102014 226 327

## Beschreibung

Die Erfindung betrifft eine Küchenmaschine mit einer Rühreinrichtung und einem Gefäß, sowie eine Verwendung der Küchenmaschine.

Zur Zubereitung von Schokolade werden üblicherweise Spezialmaschinen eingesetzt, weil Schokolade in Abhängigkeit von dem Temperiervorgang bei der Zubereitung in verschiedene Gitterstrukturen kristallisieren kann.

Beim Zubereiten von Schokolade ist es das Ziel, durch geeignetes Temperieren der Schokoladenmasse einen hohen Anteil von β-Kristallen und einen möglichst geringeren Anteil von Kristallen anderer instabilerer Formen, wie z.B. der Form IV, in der geschmolzenen Schokolade zu erzeugen. Da der Schmelzpunkt der β-Form höher ist als bei den anderen Modifikationen, genügt es grundsätzlich, flüssige Schokolade auf 34 °C zu kühlen und so lange umzurühren, bis sich genügend Kristallisationskeime gebildet haben, um die gesamte Schokoladenmasse durch rasche Abkühlung in der β-Form erstarren zu lassen. Küchengeräte mit einer Rühreinrichtung sind aus den Druckschriften WO02/13622, WO2016/165454 und DE102014226327 bekannt. Durch die Erfindung soll eine Herstellung von hochwertiger Schokolade selbst in einem Privathaushalt möglich werden, ohne dafür eine Spezialmaschine anschaffen zu müssen.

Zur Lösung der Aufgabe dienen eine Küchenmaschine gemäß Anspruch 1 sowie eine Verwendung der Küchenmaschine gemäß Anspruch 12. Vorteilhafte Ausführungsformen ergeben sich aus den Unteransprüchen.

Zur Lösung der Aufgabe dient eine Küchenmaschine mit einer Rühreinrichtung und einem Gefäß. Es ist ein Einsatzgefäß vorgesehen, welches in das Gefäß so eingesetzt werden kann, dass ein Zwischenraum zwischen dem Gefäß und dem Einsatzgefäß verbleibt. Ein eingesetztes Einsatzgefäß kann wieder aus dem Gefäß herausgenommen werden, ist also nicht dauerhaft mit dem Gefäß gekoppelt. Die Rühreinrichtung weist ein Werkzeug zum Mischen und/oder Zerkleinern auf. Das Werkzeug befindet sich in dem Zwischenraum, wenn das Einsatzgefäß eingesetzt ist.

Eine Küchenmaschine ist ein elektrisch angetriebenes Gerät zum Zubereiten einer Speise im Privathaushalt. Insbesondere ist die Küchenmaschine so beschaffen, dass in dem Gefäß feste oder flüssige Nahrungsmittel aufgenommen und zu einer Speise zubereitet werden können. Auch das Einsatzgefäß ist so beschaffen, dass darin feste oder flüssige Nahrungsmittel aufgenommen und zu einer Speise zubereitet werden können. Das Einsatzgefäß ist vorzugsweise nach unten flüssigkeitsdicht ausgestaltet. "Nach unten" meint bei einer vorgesehenen Benutzung in Schwerkraftrichtung. Alternativ kann das Einsatzgefäß am Grund eine Öffnung aufweisen, die aber während der Herstellung von Schokolade durch ein Zusatzbauteil flüssigkeitsdicht verschlossen ist. Durch das Zusatzbauteil kann beispielsweise eine Welle hindurchgeführt sein, um im Inneren des Zusatzgefäßes beispielsweise einen Schaber bewegen zu können. Der Zwischenraum ist durch das Gefäß und das Einsatzgefäß und erforderlichenfalls mit Hilfe von weiteren Bauteilen wasserdicht und zwar bei einer vorgesehenen Benutzung in Schwerkraftrichtung. "Bei Benutzung" meint ein Abstellen der Küchenmaschine mit Gefäß und darin eingesetztem Zwischengefäß auf einem im Wesentlichen horizontalen Untergrund.

Eine Rühreinrichtung ist allgemein eine Einrichtung zum Mischen und/oder Zerkleinern von Nahrungsmitteln durch ein Werkzeug, das durch einen Elektromotor der Rühreinrichtung angetrieben werden kann. Die Übertragung eines Antriebsmoments oder einer Antriebsbewegung von dem Elektromotor auf das Werkzeug kann bevorzugt über ein Getriebe und/oder mittels Magnetkraft erfolgen.

Allgemein ist das Werkzeug bei einer Küchenmaschine der Teil der Rühreinrichtung, der in unmittelbaren Kontakt zu einem Nahrungsmittel in dem Gefäß stehen und das Nahrungsmittel rühren, mischen oder zerkleinern kann.

Ein Werkzeug zum Mischen und/oder Zerkleinern, das sich in dem Zwischenraum befindet, meint einen Teil der Rühreinrichtung innerhalb des Zwischenraums, der dazu eingerichtet ist, ein innerhalb des Zwischenraums befindliches Medium oder Wärmeträgermedium bewegen zu können. Das Werkzeug kann somit ein separates Bauteil sein, das mit der Rühreinrichtung verbunden ist. Alternativ oder ergänzend kann das Werkzeug ein Konturabschnitt der Rühreinrichtung sein. Falls sich ein Medium oder Wärmeträgermedium wie z.B. Wasser innerhalb des Zwischenraums befindet, steht das Werkzeug in unmittelbaren Kontakt zu dem Wärmeträgermedium und kann das Wärmeträgermedium bewegen, wenn das Werkzeug durch einen Elektromotor angetrieben wird.

Für ein besonders effektives Bewegen des Mediums oder Wärmeträgermediums hat das Werkzeug eine nicht rotationssymmetrische Außenkontur. Bevorzugt ist das Werkzeug ein Mixmesser.

Bevorzugt ist das Werkzeug um seine Drehachse drehsymmetrisch, kann also durch Rotation um vorgegebene Winkel auf sich selbst abgebildet werden. Es kann dann vibrationsarm und damit besonders hochtourig rotieren. Bevorzugt umfasst das Werkzeug seitlich von der Drehachse abstehende Klingen oder Messer, mit denen nicht nur gerührt, sondern auch zerkleinert werden kann.

Dadurch, dass sich das Werkzeug zum Mischen und/oder Zerkleinern in dem Zwischenraum befindet, kann durch das Werkzeug eine Strömung in einem sich in dem Zwischenraum befindlichen Wärmeträgermedium erzeugt werden. Eine durch das Werkzeug erzeugbare Strömung kann wiederum eine besonders homogene Temperaturverteilung in dem Wärmeträgermedium bewirken, indem kälterer Anteile und wärmerer Anteile des Wärmeträgermediums miteinander vermischt werden. Eine besonders gleichmäßige Wärmeeinbringung über das Einsatzgefäß in die Schokoladenmasse kann so ermöglicht werden und zwar für einen besonders langen Zeitraum, so dass ein besonders hoher Anteil von β-Kristallen in der Schokoladenmasse erzielt werden kann. Ohne das Anschaffen einer Spezialmaschine kann somit durch den Einsatz einer bestehenden Küchenmaschine Schokolade mit besonders hoher Qualität zubereitet werden.

In einer Ausführungsform kann ein Wärmeträgermedium in dem Zwischenraum durch ein Heizelement erhitzt und/oder durch die Rühreinrichtung bewegt werden. Insbesondere ist das Wärmeträgermedium niedrig viskos oder flüssig. Bevorzugt ist das Wärmeträgermedium Wasser. Da Wasser in der Küche normalerweise schnell und preiswert verfügbar ist, kann der Zwischenraum so mit geringem Aufwand mit Wärmeträgermedium gefüllt werden.

Eine Schokoladenmasse in dem Einsatzgefäß kann über das Wärmeträgermedium in dem Zwischenraum besonders gleichmäßig temperiert werden, wobei das Wärmeträgermedium bevorzugt indirekt durch das Heizelement erhitzt wird. Durch das Bewegen des Wärmeträgermediums mithilfe der Rühreinrichtung kann ferner eine besonders homogene Temperaturverteilung des Wärmeträgermediums erzielt und eine zusätzliche Bewegungseinheit eingespart werden. Vorzugsweise wird das Wärmeträgermedium durch das Werkzeug der Rühreinrichtung bewegt, das wiederum durch den Elektromotor der Rühreinrichtung angetrieben wird.

Bevorzugt kann durch das Heizelement der Küchenmaschine das Gefäß erhitzt werden, so dass eine Schokoladenmasse mithilfe des Wärmeträgermediums aufgeschmolzen werden kann.

Vorzugsweise ist ein Temperatursensor von der Küchenmaschine umfasst, durch den eine Temperatur des Gefäßes oder eines Inhalts des Gefäßes gemessen werden kann. insbesondere wird die gemessene Temperatur zum Regeln des Heizelements eingesetzt, um eine näherungsweise konstante Soll-Temperatur des Inhalts des Gefäßes, also beispielsweise einer Speise oder des Wärmeträgermediums, zu erzielen und aufrechtzuerhalten. Die aufgeschmolzene Schokoladenmasse kann so auf einer bestimmten Temperatur gehalten oder gezielt temperiert werden.

Insbesondere gibt es eine Temperiereinrichtung, die wenigstens ein Heizelement, wenigstens einen Temperatursensor und wenigstens eine Steuereinrichtung umfassen kann, um eine gewünschte Temperatur des Gefäßes zu erreichen und zumindest näherungsweise konstant aufrecht zu halten. Ein Eingabemittel kann vorgesehen werden, um eine gewünschte Temperatur einzustellen. Aber auch ein durch den Benutzer ausgewähltes oder konfiguriertes Programm kann die gewünschte Temperatur einstellen oder vorgegeben.

Bevorzugt sind das Heizelement und/oder der Temperatursensor in einem Gehäuse der Küchenmaschine integriert. Das Heizelement kann ein induktives Heizelement sein. Es kann aber auch über ein Wärmeübertragungsmedium mittels Wärmeleitung das Gefäß und damit auch einen Inhalt im Gefäß erhitzen.

Erfindungsgemäß ist ein Schaber vorgesehen. Der Schaber kann in das Einsatzgefäß hineinreichen. Die Küchenmaschine ist vorzugsweise so eingerichtet, dass der Schaber relativ zu dem Einsatzgefäß bewegt werden kann. Die Küchenmaschine kann also so eingerichtet sein, dass eine Relativbewegung zwischen dem Schaber und dem Einsatzgefäß erfolgen kann und zwar insbesondere für ein Zubereiten von Schokolade. Es kann so eine besonders homogene Temperaturverteilung in der Schokoladenmasse erzielt werden, was die Herstellung von Schokolade begünstigt.

In einer Ausführungsform ist der Schaber beheizbar, um eine besonders homogene Temperaturverteilung in der Schokoladenmasse zu erreichen.

In einer Ausführungsform ist der Schaber oder dessen Außenkontur so an die Innenkontur des Einsatzgefäßes angepasst, dass der Schaber im Betrieb an der Innenseite des Einsatzgefäßes entlangschabt, d.h. direkt in Kontakt mit der Innenseite des Einsatzgefäßes steht oder zumindest über einen nur geringen Spalt davon getrennt ist. Dadurch, dass im Betrieb der Schaber an der Innenseite des Einsatzgefäßes entlangschabt, kann ein übermäßiges Aufheizen im Randbereich vermieden und eine besonders hochwertige Schokolade zubereitet werden.

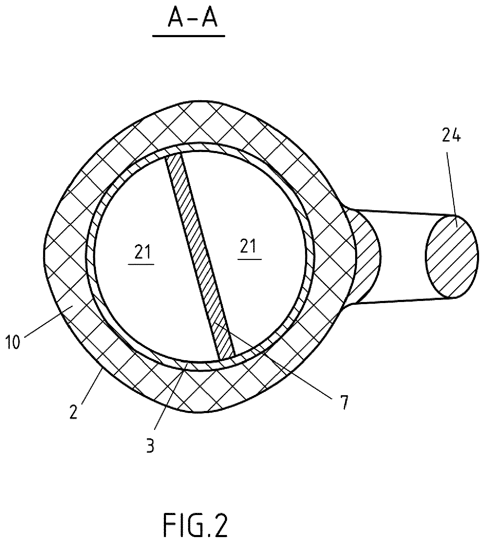

In einer Ausführungsform ist der Schaber oder dessen Außenkontur so an die Innenkontur des Einsatzgefäßes angepasst, dass der Schaber das Einsatzgefäß insbesondere entlang einer Mittelachse in zwei gleich große Hälften teilt und/oder sich entlang einer Mittelachse erstreckt, d.h. in einer Ebene durch die Mittelachse des Einsatzgefäßes das Einsatzgefäß in zwei gleich große Hälften teilt. Insbesondere teilt der Schaber das Einsatzgefäß im Querschnitt betrachtet in zwei gleich große Hälften (s. Fig. 2).

Durch das Teilen des Einsatzgefäßes in zwei gleich große Hälften durch den Schaber wird ein besonders effektives Durchrühren einer geschmolzenen Schokoladenmasse ermöglicht. Es kann so weiter verbessert Schokolade hergestellt werden.

Vorzugsweise trennt der Schaber 7 die eine Hälfte von der anderen gleich großen Hälfte zu mindestens 50%, bevorzugt 75%, besonders bevorzugt 90% der Fläche in der Ebene entlang der Mittelachse des Einsatzgefäßes ab und/oder höchstens 95 %. Insbesondere wird das Einsatzgefäß durch den Schaber vom Grund des Einsatzgefäßes bis mindestens zur Mitte des Einsatzgefäßes, bis zur Oberkante des Einsatzgefäßes oder über die Oberkante hinaus durch den Schaber geteilt. Die Oberkante umschließt allgemein das oben offene Ende des Einsatzgefäßes. Durch das Teilen bzw. Trennen im oben beschriebenen Umfang kann besonders effektiv vermieden werden, dass sich verflüssigte Schokoladenmasse dem Durchmischen durch den Schaber entzieht. Die verflüssigte Schokolade kann dadurch gezwungen werden, durch eine dafür vorgesehene Durchlauföffnung im Schaber von der einen Seite des Schabers zur anderen Seite des Schabers zu fließen. Es kann so weiter verbessert Schokolade hergestellt werden.

In einer Ausführungsform umfasst der Schaber mindestens eine Durchlauföffnung. Die Durchlauföffnung verbindet die zwei gleich großen Hälften des Einsatzgefäßes, die durch den Schaber entlang der Mittelachse des Einsatzgefäßes voneinander getrennt werden. Eine verflüssigte Schokoladenmasse kann somit durch die Durchlauföffnung von der einen Seite des Schabers zur anderen Seite des Schabers gelangen. Die Bildung von β-Kristallen kann so besonders effektiv unterstützt werden, um besonders hochwertige Schokolade herstellen zu können.

Vorzugsweise sind eine oder mehrere bevorzugt schlitzförmige Durchlauföffnungen vorgesehen, insbesondere mindestens zwei, bevorzugt drei, besonders bevorzugt vier, und/oder höchstens fünfzehn, bevorzugt höchstens zehn, besonders bevorzugt höchstens acht. Die Bildung von β-Kristallen kann so besonders effektiv unterstützt werden, um besonders hochwertige Schokolade herstellen zu können.

Vorzugsweise verlaufen schlitzförmige Durchlauföffnungen horizontal und/oder in einem außermittigen Bereich zur Mittelachse des Einsatzgefäßes. Auch hierdurch kann die Bildung von β-Kristallen besonders effektiv unterstützt werden, um besonders hochwertige Schokolade herstellen zu können.

Erfindungsgemäß erfolgt die Relativbewegung zwischen dem Schaber und dem Einsatzgefäß mithilfe der Rühreinrichtung. Die Rühreinrichtung treibt also das Einsatzgefäß oder den Schaber an. Ein zusätzlicher Antrieb kann so eingespart werden. Vorzugsweise treibt ein Elektromotor der Rühreinrichtung die Relativbewegung zwischen dem Schaber und dem Einsatzgefäß an. Ein zusätzlicher Motor zum Antreiben der Relativbewegung kann dadurch eingespart werden. Insbesondere ist der Elektromotor zum Antreiben des Werkzeugs eingerichtet. Der Elektromotor erhält somit eine Doppelfunktion.

In einer Ausführungsform ist eine Abdeckung zum Abdecken des Zwischenraums vorgesehen, die drehfest zum Gefäß und/oder drehfest an dem Gefäß fixierbar ist.

Fixierbar meint, dass bei Bedarf ein Fixieren durch den Benutzer ohne den Einsatz eines Hilfswerkzeugs möglich ist und gleichsam die Fixierung ohne den Einsatz eines Hilfswerkzeugs gelöst werden kann. Insbesondere kann die Abdeckung bewegungsfest an dem Gefäß fixiert werden, vorzugsweise an der Oberseite des Gefäßes. Bevorzugt ist eine Fixierung durch eine kraftschlüssige und/oder formschlüssige Verbindung umgesetzt, wie beispielsweise eine Schraubverbindung, eine Rastverbindung und/oder eine Schnappverbindung.

Drehfest zum Gefäß bezieht sich auf ein Drehen um eine Längsachse des Gefäßes. Eine drehfest zum Gefäß fixierte Abdeckung kann auch an einer anderen Komponente, also nicht oder zumindest nicht nur an dem Gefäß, fixiert sein, solange die Abdeckung dadurch drehfest zum Gefäß fixiert ist.

Durch eine Abdeckung zum Abdecken des Zwischenraums, die drehfest zum Gefäß und/oder drehfest an dem Gefäß fixierbar ist, kann die Abdeckung mit besonders geringem Zusatzaufwand dazu eingesetzt werden, eine weitere Komponente wie z.B. einen Schaber für das Einsatzgefäß drehfest zum Gefäß zu fixieren.

Durch das Abdecken des Zwischenraums durch die Abdeckung, bevorzugt von oben, kann gleichzeitig vermieden werden, dass kondensiertes Wärmeträgermedium zur Schokoladenmasse im Inneren des Einsatzgefäßes gelangt. Der Abdeckung kommt daher eine Doppelfunktion zu.

Es ist aber auch nicht ausgeschlossen, das die Abdeckung relativ zum Gefäß drehbar gelagert ist. Das Einsatzgefäß oder der Schaber können dann drehfest oder bewegungsfest mit der Abdeckung verbunden werden, so dass das Einsatzgefäß bzw. der Schaber über die Abdeckung drehbar gelagert werden kann und zwar relativ zum Gefäß.

In einer Ausführungsform ist der Schaber drehfest zum Gefäß fixierbar. In einer weiteren Ausführungsform ist der Schaber an dem Gefäß oder an der Abdeckung drehfest fixierbar.

Ein drehfest zum Gefäß fixbierbarer Schaber ermöglicht eine Relativbewegung zum Einsatzgefäß durch ein Drehen des Einsatzgefäßes. Ein besonders einfach umsetzbares Antreiben des Einsatzgefäßes und damit der Erzeugung einer Relativbewegung durch die Rühreinrichtung werden so ermöglicht.

Ein Schaber, der an der Abdeckung fixierbar ist, kann besonders komfortabel fern von der Küchenmaschine und unabhängig von dem vergleichsweise voluminösen Gefäß gehandhabt werden, um beispielsweise den Schaber an der Abdeckung zu fixieren, zu lösen und getrennt von der Abdeckung zu reinigen.

Ein Schaber, der an dem Gefäß fixierbar ist, kann besonders zuverlässig fixiert werden, insbesondere wenn das Gefäß aus Metall hergestellt ist. Auch das Einsatzgefäß besteht zur Erzielung einer guten Wärmeübertragung vorzugsweise ganz oder überwiegend aus Metall.

Alternativ kann anstelle des Schabers das Einsatzgefäß dazu eingerichtet sein, drehfest an dem Gefäß oder der Abdeckung fixierbar zu sein. In diesem Fall ist der Schaber zum Durchmischen in Rotation relativ zum fixierten Einsatzgefäß zu bringen. Dies kann beispielsweise durch einen magnetischen Schaber erfolgen, der durch einen rotierenden Magneten in Rotation versetzt wird.

In einer Ausführungsform ist eine Drehkopplungseinrichtung vorgesehen, die das Werkzeug mit dem Einsatzgefäß drehfest verbindet. Das Werkzeug ist also mit dem Einsatzgefäß drehfest verbunden und auch umgekehrt das Einsatzgefäß drehfest mit dem Werkzeug verbunden. Drehfest zum Einsatzgefäß bezieht sich auf eine Mittelachse des Einsatzgefäßes. Drehfest zum Werkzeug, zum Elektromotor oder zur Rühreinrichtung bezieht sich eine Rotationsachse des Werkzeugs.

Durch die Drehkopplungseinrichtung, die das Werkzeug mit dem Einsatzgefäß drehfest verbindet, kann ohne einen zusätzlichen Antrieb das Einsatzgefäß mit dem Elektromotor der Rühreinrichtung angetrieben werden. Zudem kann die Küchenmaschine auf diese Weise mit besonders geringem Aufwand zur Zubereitung von Schokolade eingesetzt werden.

Bevorzugt kann die Drehkopplungseinrichtung ein Verbindungselement sein oder umfassen, das mit einem Ende mit dem Werkzeug und/oder mit dem anderen Ende mit dem Einsatzgefäß durch Formschluss drehfest verbunden werden kann oder permanent, also unlösbar, drehfest verbunden ist. Bevorzugt ist das Verbindungselement mit dem Einsatzgefäß permanent verbunden, um Reinigungs- und Handhabungsvorteile zu erzielen.

Bevorzugt greift ein Arm der Drehkopplungseinrichtung oder des einen Endes des Verbindungselements über einen radialen Vorsprung des Werkzeugs, um eine formschlüssige, drehfeste Drehkopplung besonders zuverlässig und einfach zu realisieren. Der Arm reicht im verbunden Zustand in einer einfachen Ausgestaltung zwischen zwei Klingen, Messer oder zwei Mischelemente des Werkzeugs, um so eine belastbare drehfeste Verbindung auf technisch einfache Weise zu schaffen.

Insbesondere kann das Werkzeug durch die Drehkopplungseinrichtung ersetzt werden, um eine besonders zuverlässige drehfeste Kopplung mit dem Einsatzgefäß zu erzielen.

Durch die Rühreinrichtung oder den Elektromotor der Rühreinrichtung kann somit durch die Drehkopplungseinrichtung ein Drehmoment oder eine Rotationsbewegung des Werkzeugs auf das Einsatzgefäß übertragen werden. Es wird dann also das Einsatzgefäß zusammen mit dem Werkzeug gedreht. Dadurch wird ein temperiertes flüssiges Wärmeträgermedium im Zwischenraum durchmischt und zugleich Schokolade oder Schokoladenzutaten im Einsatzgefäß auf technisch einfache Weise gerührt werden.

Es kann aber auch eine Drehkopplungseinrichtung vorgesehen sein, die das Werkzeug mit dem Schaber drehfest verbindet. Die Drehkopplungseinrichtung umfasst dann insbesondere einen Magneten, der durch die Rühreinrichtung, den Elektromotor oder das Werkzeug rotiert wird, um diese Rotation durch Magnetkraft auf den Schaber mit einem Magneten oder einen magnetischen Schaber zu übertragen. Insbesondere ist der Magnet so beschaffen, dass der Magnet bewegungsfest an dem Werkzeug fixierbar ist. Alternativ kann ein Austauschwerkzeug mit einem oder mehreren integrierten Magneten eingesetzt werden.

Das Werkzeug ist vorzugsweise unlösbar mit der Welle verbunden, um die Zahl der handzuhabenden Teile gering zu halten und damit die Handhabung und auch den Reinigungsaufwand zu erleichtern. Die Welle mit dem daran angebrachten Werkzeug ist vorzugsweise lösbar mit dem Elektromotor drehfest verbunden bzw. kann drehfest mit dem Elektromotor verbunden werden. Daher kann die Welle zusammen mit dem Werkzeug leicht gereinigt werden, um ein gründliches Reinigen weiter verbessert zu erleichtern. Die Welle ist vorzugsweise mit einer Dichteinrichtung flüssigkeitsdicht verbunden, mit der eine Öffnung im Grund des Gefäßes flüssigkeitsdicht verschlossen wird bzw. verschlossen werden kann, um so die Handhabung und den Reinigungsaufwand weiter verbessert zu erleichtern. Die Welle ist dann also während der Benutzung durch den Grund des Gefäßes hindurchgeführt. Die Welle kann aber wieder vom Gefäß gelöst werden, um gründlich reinigen zu können.

In einer Ausführungsform weist die Abdeckung ein Lager zum drehbeweglichen Lagern des Einsatzgefäßes auf. Drehbewegliches Lagern meint, dass sich das Einsatzgefäß relativ zur Abdeckung drehen kann, wenn es über das Lager mit der Abdeckung verbunden ist. Dadurch, dass die Abdeckung ein Lager zum drehbeweglichen Lagern des Einsatzgefäßes aufweist, kann besonders einfach ermöglicht werden, dass das Einsatzgefäß drehbar zum Gefäß gelagert ist und gleichzeitig der Schaber drehfest zum Gefäß fixierbar ist.

In einer Ausführungsform liegt ein umlaufender Absatz des Einsatzgefäßes auf dem Lager auf. Eine besonders einfache und zuverlässige bewegliche Lagerung des Einsatzgefäßes, die ein Drehen um die Mittelachse des Einsatzgefäßes erlaubt, wird so ermöglicht.

Insbesondere verläuft der Absatz 360° um die Mittelachse des Einsatzgefäßes. Bevorzugt ist der Absatz in einem oberen Bereich oder an der oberen Kante des Einsatzgefäßes angeordnet. Vorzugsweise ist der Absatz durch ein Umbiegen oder Umformen der Kante hergestellt. Insbesondere steht der Absatz im Wesentlichen senkrecht von der Außenseite des Einsatzgefäßes ab und/oder bildet eine L-Form an der oberen Kante des Einsatzgefäßes. Eine aufwendig herzustellende Kontur zur Verbindung mit dem Lager kann somit eingespart werden.

Das Lager ist insbesondere ein Kugellager. Alternativ oder ergänzend kann auch ein Gleitlager vorgesehen werden.

In einer Ausführungsform erstreckt sich das Lager ringförmig oder ringsegmentförmig um die Längsachse des Gefäßes. Eine besonders große Auflagefläche des Einsatzgefäßes oder des Absatzes des Einsatzgefäßes auf dem Lager kann somit gewährleistet werden. Ein Haften des Einsatzgefäßes auf dem Lager alleine durch Schwerkraft kann so ermöglicht werden. Bevorzugt weist das Lager an der Oberseite eine rutschfeste Beschichtung oder einen rutschfesten Belag beispielsweise aus Gummi auf, um Schlupf zwischen dem Einsatzgefäß und dem Lager und damit unkontrollierte Bewegungen zu vermeiden.

In einer Ausführungsform umfasst die Abdeckung ein Basisteil zum Bereitstellen eines Lagersitzes und/oder zum Fixieren an dem Gefäß, ein Anschlussteil zum Fixieren des Schabers und/oder ein Deckelteil für ein Schließen einer Abdeckungsöffnung. Der Lagersitz dient insbesondere zum Aufnehmen des Lagers. Die Abdeckungsöffnung ermöglicht es dem Benutzer, Zutaten von oben in das Einsatzgefäß zu geben. Durch den Deckel zum Verschließen der Abdeckungsöffnung wird ermöglicht, die Temperatur in dem Ersatzgefäß auch über einen längeren Zeitraum besonders präzise regeln zu können.

Durch das Vorsehen des Basisteils und des Anschlussteils wird ermöglicht, dass das Einsatzgefäß, die Abdeckung und der Schaber von dem Benutzer miteinander fixiert und gelöst werden können, damit jede der Komponenten besonders sorgfältig gereinigt werden kann.

Zudem können durch verschiedene Varianten des Einsatzgefäßes und/oder des Schabers mehrere Sorten oder Mengen von Schokolade zubereitet und zumindest einige der Komponenten auch zum Zubereiten anderer Speisen wiederverwendet werden. Dies ermöglicht eine besonders hohe Flexibilität ohne zusätzliche Teile.

Das Einsatzgefäß kann aber auch in einer technisch besonders einfachen Ausführungsform so auf der Welle, an der das Werkzeug befestigt ist, aufgesetzt sein, dass ein umlaufender Absatz des Einsatzgefäßes lediglich in eine umlaufende Nut in der Abdeckung hineinreicht. Auch bei dieser Ausführungsform kann die Abdeckung vorteilhaft eine Öffnung umfassen, die einen Zugang in das Einsatzgefäß darstellt. Über die Öffnung können dann Zutaten in das Einsatzgefäß hineingegeben werden.

In einer Ausführungsform sind das Einsatzgefäß, das Gefäß und/oder das Werkzeug koaxial zueinander angeordnet. Eine besonders kompakte Anordnung wird so ermöglicht.

Bevorzugt ist das Einsatzgefäß rotationssymmetrisch geformt, vorzugsweise im Wesentlichen insgesamt rotationssymmetrisch oder in einem mittleren Bereich und/oder einem Bodenbereich rotationssymmetrisch. Eine besonders gleichmäßige Drehbewegung und Strömung des Wärmeträgermediums kann so ermöglicht werden.

Das Gefäß umfasst vorzugsweise einen Griff und ist daher in der Regel nicht rotationssymmetrisch geformt. Allerdings können Bereiche des Gefäßes und zwar insbesondere Bereiche beim Grund des Gefäßes rotationssymmetrisch oder zumindest drehsymmetrisch sein.

Ein weiterer Aspekt der Erfindung betrifft die Verwendung der oben beschriebenen Küchenmaschine zur Zubereitung von Schokolade. Eine Schokolade mit besonders hoher Qualität kann so zubereitet werden, ohne eine zusätzliche Spezialmaschine beschaffen zu müssen.

Ein weiterer Aspekt der Erfindung betrifft ein Verfahren zur Zubereitung von Schokolade, bei dem eine Küchenmaschine, insbesondere die oben beschriebene Küchenmaschine, mit einer Rühreinrichtung und einem Gefäß sowie einem Einsatzgefäß vorgesehen ist, wobei das Einsatzgefäß in das Gefäß eingesetzt wird und der Zwischenraum zwischen dem Gefäß und dem Einsatzgefäß, in dem sich insbesondere ein Werkzeug zum Mischen und/oder Zerkleinern der Rühreinrichtung befindet, mit einem Wärmeträgermedium befüllt wird. Die oben genannten Merkmale und Ausführungsformen der Küchenmaschine bilden die Ausführungsformen dieses Verfahrens. Eine besonders hochwertige Schokolade kann dadurch hergestellt werden.

Ein weiterer Aspekt der Erfindung betrifft ein Einsatzsystem für die Küchenmaschine mit einer Rühreinrichtung und einem Gefäß insbesondere des eingangs beschriebenen Aspekts der Erfindung, wobei das Einsatzsystem ein Einsatzgefäß, einen Schaber und/oder eine Abdeckung umfasst. Die oben genannten Merkmale und Ausführungsformen der vorhergehenden Aspekte der Erfindung bilden die Ausführungsformen dieses Aspektes der Erfindung.

Durch das Einsatzsystem kann Schokolade mit einer bestehenden Küchenmaschine zubereitet werden. Es muss keine zusätzliche Spezialmaschine für die Schokoladenherstellung angeschafft werden.

Ein weiterer Aspekt der Erfindung zur Lösung der eingangs gestellten Aufgabe betrifft eine Küchenmaschine mit einer Rühreinrichtung und einem Gefäß, wobei ein Einsatzgefäß vorgesehen ist, welches in das Gefäß so eingesetzt werden kann, dass ein Zwischenraum zwischen dem Gefäß und dem Einsatzgefäß verbleibt. Mit einer solchen Küchenmaschine kann eine besonders hochwertige Schokolade hergestellt werden. Die oben genannten Merkmale und Ausführungsformen der vorhergehenden Aspekte der Erfindung bilden die Ausführungsformen dieses Aspektes der Erfindung.

Nachfolgend werden Ausführungsbeispiele der Erfindung anhand von Figuren näher erläutert. Merkmale der Ausführungsbeispiele und weiterer nachfolgend beschriebener alternativer oder ergänzender Ausgestaltungen können einzeln oder in einer Mehrzahl mit den beanspruchten Gegenständen kombiniert werden. Die beanspruchten Schutzbereiche sind nicht auf die Ausführungsbeispiele beschränkt.

Es zeigen:
- Figur 1:: Schematische Schnittdarstellung einer Küchenmaschine von der Seite
- Figur 2:: Schematische Schnittdarstellung der Küchenmaschine von oben.

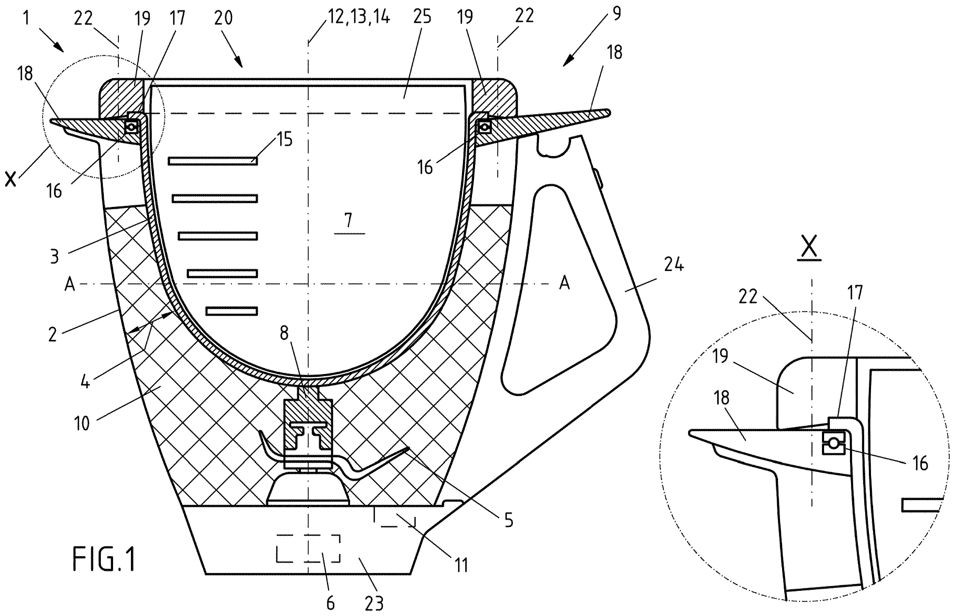

Die Figur 1 zeigt eine Küchenmaschine 1 mit einer Rühreinrichtung 5, 6 und einem Gefäß 2, das von einem Gehäuse 23 an der Unterseite verschlossen werden kann. Ein Griff 24 ist seitlich am Gefäß 2 angebracht. Die Küchenmaschine 1 ist dazu bestimmt, eine Speise zuzubereiten. Beispielsweise wird dafür ein Nahrungsmittel in das Gefäß 2 gegeben und durch das insbesondere als Mixmesser vorliegende Werkezeug 5 der Rühreinrichtung 5, 6 zerkleinert. Mittels des Heizelements 11 kann das Nahrungsmittel im Gefäß 2 gegart werden, um eine Speise zuzubereiten.

Für die Zubereitung von Schokolade mit dieser Küchenmaschine 1 wird ein Einsatzsystem eingesetzt, das ein Einsatzgefäß 3, einen Schaber 7 und eine Abdeckung 9 umfasst.

Die Abdeckung 9 setzt sich im Wesentlichen aus einem Basisteil 18, einem Anschlussteil 19 und einem Deckel zusammen. Die Abdeckung 9 weist eine Abdeckungsöffnung 20 auf, die sich durch eine Zugangsöffnung des Anschlussteils 19 und eine koaxial zur Mittelachse 13 des Einsatzgefäßes 3 geformte Öffnung des Basisteils 18 erstreckt.

Die Abdeckung 9 liegt mit dem Basisteil 18 auf dem Gefäß 2 auf, d.h. mit der unteren Oberfläche des Basisteils 18. Das Basisteil 18 kann drehfest um die Längsachse 12 des Gefäßes 2 an dem Gefäß 2 fixiert werden, beispielsweise durch eine rutschfeste Oberfläche oder einen nicht dargestellten Klemm- oder Verriegelungsmechanismus. In einer Ausführungsform können ein oder zwei gegenüberliegende, seitliche Verriegelungselemente (in den Schnittdarstellungen der Fig. 1 und 2 nicht sichtbar) der Küchenmaschine die Abdeckung 9 oder das Basisteil 18 der Abdeckung 9 auf das Gefäß 2 pressen, um eine drehfeste Fixierung insbesondere automatisch oder motorisiert ermöglichen zu können.

An dem Basisteil 18 ist auf der oberen Seite ein Lager 16 angeordnet, insbesondere in Form eines Kugellagers. Das Lager 16 kann aber auch ein Gleitlager sein. Das Lager 16 erstreckt sich insbesondere um die Öffnung des Basisteils 18, grenzt an die Öffnung an und/oder fluchtet mit einem Innenrand der Öffnung.

Die Öffnung des Basisteils 18 ist so an das Einsatzgefäß 3 angepasst, dass das Einsatzgefäß 3 mit dem Boden des Einsatzgefäßes 3 voran von oben durch die Öffnung des Basisteils 18 durchgeführt werden kann, bis ein umlaufender, radialer Absatz 17 von oben auf das Lager 16 aufsetzt. Das auf diese Weise mit dem Basisteil 18 verbundene Einsatzgefäß 3 kann dadurch drehbar zu der Abdeckung 9 gelagert werden. Wenn die Abdeckung 9 wie oben beschrieben drehfest an dem Gefäß 2 fixiert ist, kann das Einsatzgefäß 3 relativ zu dem Gefäß 2 gedreht werden. Dadurch, dass die Öffnung des Basisteils 18 bevorzugt koaxial zu der Mittelachse 13 des Einsatzgefäßes 3 orientiert ist, kann das Einsatzgefäß 3 koaxial zu der Längsachse 12 des Gefäßes 2 gedreht werden.

Die Öffnung des Basisteils 18 hat bevorzugt einen geringeren Durchmesser als das Gefäß 2 oder die Oberkante des Gefäßes 2. Ein Zwischenraum 4 kann somit zwischen dem Einsatzgefäß 3 und dem Gefäß 2 vorhanden sein. Der Zwischenraum kann durch Basisteil 18 in definierter Weise aufrechterhalten werden. Gleichsam deckt das Basisteil 18 den Zwischenraum 4 ab und vermeidet somit ein Verschmutzen des Wärmeträgermediums 10 innerhalb des Zwischenraums 4.

In einer Ausführungsform weist das Basisteil 18 eine Klappe auf, um das Wärmeträgermediums 10 in den Zwischenraum 4 zu füllen, ohne die Abdeckung 9 von dem Gefäß 2 lösen zu müssen. In einer alternativen oder ergänzenden Ausführungsform wird zunächst das Wärmeträgermediums 10 in das Gefäß 2 gefüllt und anschließend die Abdeckung 9 zusammen mit dem damit verbundenen Einsatzgefäß 3 in das Gefäß 2 eingesetzt.

Nachdem das Einsatzgefäß 3 wie oben beschrieben mit dem Basisteil 18 verbunden wurde, wird das Anschlussteil 19 von oben an dem Basisteil 18 befestigt. Bevorzugt erfolgt das Befestigen über mindestens eine Schraubverbindung 22, die so eingerichtet ist, dass die Schraubverbindung mit einer Hand angezogen und gelöst werden kann. Alternativ kann ein Klemm- oder Schnappmechanismus eingesetzt werden.

Durch das Anschlussteil 19 kann so das Einsatzgefäß 3 verliersicher in der Abdeckung 9 aufgenommen werden. Das Anschlussteil 19 ist dazu insbesondere oberhalb des Absatzes 17 des Einsatzgefäßes 3 angeordnet und blockiert somit ein Herausbewegen des Einsatzgefäßes 3 nach oben aus dem Basisteil 18. Bevorzugt ist im betriebsbereiten Zustand ein Luftspalt zwischen dem Absatz 17 des Einsatzgefäßes 3 und einer Unterseite des Anschlussteils 19 vorgesehen. Ein Einklemmen des Einsatzgefäßes 3 kann so vermieden werden. Zudem wird im Betrieb das Einsatzgefäß 3 durch sein Eigengewicht sowie dem Füllgewicht nach unten auf das Lager 16 gedrückt, so dass das Einsatzgefäß 3 im Betrieb zuverlässig und ohne Schlupf auf dem Lager 16 aufliegt.

Das Anschlussteil 19 hat eine Doppelfunktion. Denn zusätzlich zu der Sicherung des Einsatzgefäßes 3 dient das Anschlussteil 19 dem bewegungsfesten Fixieren des Schabers 7, insbesondere durch eine Ausnehmung 25 und Befestigungsmittel des Anschlussteils 19
Bevor das Anschlussteil 19 an dem Basisteil 18 befestigt wird, erfolgt daher das Anbringen und Fixieren des Schabers 7 an dem Anschlussteil 19. Insbesondere ist die Ausnehmung 25 an der Unterseite des Anschlussteils 19 vorgesehen, die im betriebsbereiten Zustand des Einsatzsystems dem Einsatzgefäß 3 zugewandt ist. Vorzugweise ist die Ausnehmung 25 eine Durchgangsöffnung, so dass der Schaber 7 von unten oder oben in die Ausnehmung 25 eingebracht werden kann. Bevorzugt ist die Ausnehmung 25 ein Schlitz, der so an die Außenkontur des Schabers 7 oder des oberen Endbereichs des Schabers 7 angepasst ist, dass der Schaber 7 eng anliegend in den Schlitz eingeführt werden kann. Befestigungsmittel wie z.B. eine manuell betätigbare Verschraubung oder ein Klemmmechanismus dient zum Fixieren des Schabers 7 in der gewünschten Position innerhalb der Ausnehmung 25. Insbesondere ist das Befestigungsmittel so eingerichtet, dass die Position des Schabers 7 relativ zum Anschlussteil 19 und damit relativ zum Boden des Einsatzgefäßes 3 flexibel eingestellt und fixiert werden kann. Toleranzen und eine Abnutzung des Schabers 7 können so ausgeglichen und eine gezielte Einstellung eines Spaltes zwischen dem Schaber 7 und dem Einsatzgefäß 3 vorgenommen werden.

Die Abdeckung umfasst ferner einen nicht dargestellten Deckel zum Schließen der Zugangsöffnung des Anschlussteils 19. Die Zugangsöffnung dient dem Zuführen von Zutaten in das Einsatzgefäß 3 und ist in den Schnittdarstellungen der Fig. 1 und 2 nicht sichtbar.

Vor dem Einsetzen des miteinander verbundenen Einsatzsystems wird die Drehkopplungseinrichtung 8 in Form eines Verbindungselements drehfest mit dem Werkzeug 5 verbunden. Insbesondere ist die Drehkopplungseinrichtung 8 zweiteilig, wobei beide Teile einen Teil des Werkzeugs 5 oder der Rühreinrichtung innerhalb des Gefäßes 2 umschließen. Im umschlossenen Zustand die beiden Teile arretiert werden. Alternativ oder ergänzend gibt es eine Vertiefung in der Drehkopplungseinrichtung 8 zum Aufstecken auf ein oberes Ende des Werkzeugs 5 oder der Rühreinrichtung innerhalb des Gefäßes 2. Bevorzugt ist ein Arm der Drehkopplungseinrichtung 8 vorgesehen, der sich an einen radialen Vorsprung des Werkezeugs 5 anlegt, um eine in Drehrichtung formschlüssige Verbindung zu erzielen. Eine Drehkopplung zwischen dem um die Rotationsachse 14 rotierbaren Werkzeug 5 und der Drehkopplungseinrichtung 8 kann entweder durch Klemmkraft der beiden Teile und/oder durch Formschluss realisiert sein.

In einer Ausführungsform ist an der oberen Seite der Drehkopplungseinrichtung 8, also an dem zum Werkzeug 5 entgegengesetzten Ende, eine axiale Vertiefung oder eine axialer Anhebung mit einer nicht rotationssymmetrischen Kontur vorgesehen (nicht dargestellt). In die Vertiefung oder auf die Anhebung kann das Einsatzgefäß in einer weiterführenden Ausführungsform mit einer entsprechend geformten Gegenkontur (nicht dargestellt) gesetzt werden, die eine drehfeste Verbindung mit der Drehkopplungseinrichtung 8 herzustellen vermag. Ein drehfestes Koppeln des Einsatzgefäßes 3 mit dem Werkzeug 5 kann auf diese Weise "blind" erfolgen, d.h. ohne das der Benutzer die Gegenkontur an der Unterseite des Einsatzgefäßes 3 und das Verbindungselement sehen kann. Diese Bauteile sind nämlich durch das Einsatzgefäße 3 und/oder die Abdeckung 9 verdeckt. Ein intuitives Einsetzen und Anschließen kann so ermöglicht werden. Die Drehkopplungseinrichtung 8 ermöglicht, dass durch den Elektromotor 6 der Dreheinrichtung 5, 6 das Einsatzgefäß 3 gedreht wird.

Die Figur 2 zeigt eine Schnittdarstellung in der in Figur 1 eingezeichneten Schnittebene von oben. Der Schaber 7 teilt das Einsatzgefäß 3 in zwei gleich große Hälften. Durch umlaufende Pfeile wird illustriert, dass sich das Einsatzgefäß 3 um den zum Gefäß 2 drehfesten Schaber 7 dreht.

Die Zubereitung von Schokolade mit der Küchenmaschine 1 erfolgt in einer Ausführungsform wie nachfolgend beschrieben.

Ein Wärmeträgermedium 10, insbesondere Wasser, wird in das Gefäß 2 gegeben. Die Drehkopplungseinrichtung 8 wird mit dem Werkzeug 5 oder einem Teil der Rühreinrichtung 5, 6 innerhalb des Gefäßes 2 verbunden. Die Abdeckung 9 mit dem damit verbundenen Einsatzgefäß 3 und dem Schaber 7 werden so in das Gefäß 2 eingesetzt, dass das Einsatzgefäß 3 drehfest mit der Drehkopplungseinrichtung 8 verbunden wird. Kakaobutter und weitere Zutaten werden über die Abdeckungsöffnung 20 dem Einsatzgefäß 3 zugeführt und der Deckel geschlossen. Über eine Benutzerschnittstelle der Küchenmaschine 1 wird ein Programm zur Zubereitung von Schokolade aufgerufen. Über das Heizelement 11 werden das Wärmeträgermedium 10 und darüber auch die Schokoladenmasse 21, die in Fig. 1 ausgeblendet ist, erhitzt und die Temperatur insbesondere mithilfe eines nicht dargestellten Temperatursensors geregelt. Der Elektromotor 6 dreht das Einsatzgefäß 3. Der Schaber 7 ist relativ zum Gefäß 2 über die Abdeckung 9 fixiert. Durch die so erzeugte Relativbewegung zwischen dem Schaber 7 und dem Einsatzgefäß 3 wird die verflüssigte Schokoladenmasse 21 durchmischt. Der Schaber 7 teilt das Einsatzgefäß 3 in zwei gleich große Hälften, wobei die Schokoladenmasse 21 nur durch mehrere schlitzförmige Durchlauföffnungen 15 von der einen Hälfte in die andere Hälfte gelangen kann. Das rotierende Werkzeug 5 treibt nicht nur das Einsatzgefäß 3 an, sondern erzeugt gleichzeitig eine Strömung in dem Wärmeträgermedium 10, das sich in dem Zwischenraum 4 zwischen dem Gefäß 2 und dem Einsatzgefäß 3 befindet. Das Wärmeträgermedium weist auf diese Weise eine homogene Temperaturverteilung auf.

Das Temperieren und Durchmischen der Schokoladenmasse 21 bei ungefähr 34°C kann dadurch in einer Weise erfolgen, dass sich ein hoher Anteil von β-Kristallen in der Schokoladenmasse 21 ausbildet und ein nur besonders geringer Anteil von Kristallen anderer instabilerer Formen wie beispielsweiser der Form IV. Schließlich wird die flüssige Schokoladenmasse 21 von 34°C insbesondere durch Entnehmen des Einsatzgefäßes 3 und Eintauchen in ein bevorzugt eiskaltes Wasserbad abrupt abgekühlt, so dass die Schokoladenmasse in der β-Form erstarrt.

Eine qualitativ hochwertige Schokolade kann somit durch die Küchenmaschine zubereitet werden.

In einer anderen Ausführungsform ist die Drehkopplungseinrichtung 8 mit dem Einsatzgefäß 3 fest verbunden, um die Zahl der zu handhabenden Teile gering zu halten. Es werden dann das Einsatzgefäß 3 zusammen mit der Drehkopplungseinrichtung 8 so in das Gefäß 2 eingesetzt, dass die Drehkopplungseinrichtung 8 mit einem Teil der Rühreinrichtung 5, 6 innerhalb des Gefäßes 2 drehfest verbunden wird. Ansonsten wird Schokolade auf die zuvor beschriebene Weise hergestellt.

## Patentansprüche

1. Küchenmaschine (1) mit einer Rühreinrichtung (5, 6) und einem Gefäß (2), wobei ein Einsatzgefäß (3) vorgesehen ist, welches in das Gefäß (2) so eingesetzt werden kann, dass ein Zwischenraum (4) zwischen dem Gefäß (2) und dem Einsatzgefäß (3) verbleibt, wobei die Rühreinrichtung (5, 6) ein Werkzeug (5) zum Mischen und/oder Zerkleinern aufweist, das sich in dem Zwischenraum (4) befindet, wenn das Einsatzgefäß (3) eingesetzt ist, wobei ein Schaber (7) vorgesehen ist, wobei die Küchenmaschine so eingerichtet ist, dass der Schaber (7) relativ zu dem Einsatzgefäß (3) bewegt werden kann, **dadurch gekennzeichnet, dass** die Relativbewegung zwischen dem Schaber (7) und dem Einsatzgefäß (3) mithilfe der Rühreinrichtung (5, 6) erfolgt.

2. Küchenmaschine (1) nach dem vorhergehenden Anspruch, **dadurch gekennzeichnet, dass** ein Wärmeträgermedium (10) in dem Zwischenraum (4) durch ein Heizelement (11), insbesondere durch eine Temperiereinrichtung, erhitzt und/oder durch die Rühreinrichtung (5, 6) bewegt werden kann.

3. Küchenmaschine (1) nach einem der vorhergehenden Ansprüche, **dadurch gekennzeichnet, dass** der Schaber (7) so an eine Innenkontur des Einsatzgefäßes (3) angepasst ist, dass der Schaber (7) im Betrieb an einer Innenseite des Einsatzgefäßes (3) entlangschabt.

4. Küchenmaschine (1) nach einem der vorhergehenden Ansprüche, **dadurch gekennzeichnet, dass** der Schaber (7) so an eine Innenkontur des Einsatzgefäßes (3) angepasst ist, dass der Schaber (7) das Einsatzgefäß (3) in zwei gleich große Hälften teilt und sich entlang einer Mittelachse (13) erstreckt.

5. Küchenmaschine (1) nach einem der vorhergehenden Ansprüche, **dadurch gekennzeichnet, dass** der Schaber (7) mindestens eine Durchlauföffnung (15) umfasst.

6. Küchenmaschine (1) nach einem der vorhergehenden Ansprüche, **dadurch gekennzeichnet, dass** eine Abdeckung (9) zum Abdecken des Zwischenraums (4) vorgesehen ist, die drehfest zum Gefäß (2) und/oder an dem Gefäß (2) fixierbar ist.

7. Küchenmaschine (1) nach dem vorhergehenden Anspruch, **dadurch gekennzeichnet, dass** der Schaber (7) drehfest zum Gefäß (2) und/oder an dem Gefäß (2) oder an der Abdeckung (9) fixierbar ist.

8. Küchenmaschine (1) nach einem der vorhergehenden Ansprüche, **dadurch gekennzeichnet, dass** eine Drehkopplungseinrichtung (8) vorgesehen ist, die das Werkzeug (5) mit dem Einsatzgefäß (3) drehfest verbindet.

9. Küchenmaschine (1) nach einem der drei vorhergehenden Ansprüche, **dadurch gekennzeichnet, dass** die Abdeckung (9) ein Lager (16) zum drehbeweglichen Lagern des Einsatzgefäßes (3) aufweist.

10. Küchenmaschine (1) nach dem vorhergehenden Anspruch, **dadurch gekennzeichnet, dass** ein umlaufender Absatz (17) des Einsatzgefäßes (3) auf dem Lager (16) aufliegt und/oder sich das Lager (16) ringförmig oder ringsegmentförmig um eine Längsachse (12) des Gefäßes (2) erstreckt.

11. Küchenmaschine (1) nach einem der fünf vorhergehenden Ansprüche, **dadurch gekennzeichnet, dass** die Abdeckung (9) ein Basisteil (18) zum Bereitstellen eines Lagersitzes und/oder zum Fixieren an dem Gefäß (2), ein Anschlussteil (19) zum Fixieren des Schabers (7) und/oder einen Deckel für ein Schließen einer Abdeckungsöffnung (20) umfasst.

12. Verwendung der Küchenmaschine (1) nach einem der vorhergehenden Ansprüche zur Zubereitung von Schokolade.

## Claims

1. Kitchen appliance (1) comprising a stirring unit (5, 6) and a pot (2), wherein an insert pot (3) is provided, which can be inserted in the pot (2) such that an interspace (4) remains between the pot (2) and the insert pot (3), wherein the stirring unit (5, 6) has a tool (5) for blending and/or chopping that is located in the interspace (4) when the insert pot (3) is inserted, wherein a scraper (7) is provided, the kitchen appliance being arranged such that the scraper (7) can be moved relative to the insert pot (3), **characterized in that** the relative movement between the scraper (7) and the insert pot (3) is carried out by means of the stirring unit (5, 6).

2. Kitchen appliance (1) according to the preceding claim, **characterized in that** a heat carrier medium (10) in the interspace (4) can be heated by a heating element (11), in particular by a tempering device, and/or be moved by the stirring unit (5, 6).

3. Kitchen appliance (1) according to one of the preceding claims, **characterized in that** the scraper (7) is adapted to an inner contour of the insert pot (3) such that the scraper (7) scrapes along an inner side of the insert pot (3) during operation.

4. Kitchen appliance (1) according to one of the preceding claims, **characterized in that** the scraper (7) is adapted to an inner contour of the insert pot (3) such that the scraper (7) divides the insert pot (3) into two equally sized halves and extends along a central axis (13).

5. Kitchen appliance (1) according to one of the preceding claims, **characterized in that** the scraper (7) comprises at least one flow-through opening (15).

6. Kitchen appliance (1) according to one of the preceding claims, **characterized in that** a cover (9) for covering the interspace (4) is provided, which is fixable in a rotationally fixed manner in relation to the pot (2) and/or to the pot (2).

7. Kitchen appliance (1) according to the preceding claim, **characterized in that** the scraper (7) is fixable in a rotationally fixed manner in relation to the pot (2) and/or to the pot (2) or to the cover (9).

8. Kitchen appliance (1) according to one of the preceding claims, **characterized in that** a rotary-coupling device (8) is provided which connects the tool (5) to the insert pot (3) in a rotationally fixed manner.

9. Kitchen appliance (1) according to one of the three preceding claims, **characterized in that** the cover (9) has a bearing (16) for rotatably mounting the insert pot (3).

10. Kitchen appliance (1) according to the preceding claim, **characterized in that** a circumferential ledge (17) of the insert pot (3) rests on the bearing (16) and/or the bearing (16) extends annularly or with a ring-segment-shape around a longitudinal axis (12) of the pot (2).

11. Kitchen appliance (1) according to one of the five preceding claims, **characterized in that** the cover (9) comprises a base part (18) for providing a bearing seat and/or for fixing to the pot (2), a connecting part (19) for fixing the scraper (7) and/or a lid for closing a cover opening (20).

12. Use of the kitchen appliance (1) according to one of the preceding claims for the preparation of chocolate.

## Revendications

1. Robot de cuisine (1) comprenant un dispositif d'agitation (5, 6) et un récipient (2), dans lequel un cuve d'insertion (3) est prévu, qui peut être inséré dans le récipient (2) tel qu'il reste un espace (4) entre le récipient (2) et le cuve d'insertion (3), dans lequel le dispositif d'agitation (5, 6) comprend un outil (5) pour mélanger et/ou broyer, qui se trouve dans l'espace intermédiaire (4) lorsque le cuve d'insertion (3) est inséré, dans lequel un racleur (7) est prévu, dans lequel le robot de cuisine est agencé tel que le racleur (7) peut être déplacé par rapport au cuve d'insertion (3), **caractérisé en ce que** le mouvement relatif entre le racleur (7) et le cuve d'insertion (3) est effectué au moyen du dispositif d'agitation (5, 6).

2. Robot de cuisine (1) selon la revendication précédente, **caractérisé en ce qu'**un agent caloporteur (10) peut être chauffé dans l'espace intermédiaire (4) par un élément chauffant (11), en particulier par un dispositif de tempérage, et/ou déplacé par le dispositif d'agitation (5, 6).

3. Robot de cuisine (1) selon l'une des revendications précédentes, **caractérisé en ce que** le racleur (7) est adapté à un contour intérieur de la cuve d'insertion (3) tel que le racleur (7) racle le long d'un côté intérieur de la cuve d'insertion (3) pendant le fonctionnement.

4. Robot de cuisine (1) selon l'une des revendications précédentes, **caractérisé en ce que** le racleur (7) est adapté à un contour intérieur du cuve d'insertion (3) 25 tel que le racleur (7) divise la cuve d'insertion (3) en deux moitiés de taille égale et s'étend le long d'un axe central (13).

5. Robot de cuisine (1) selon l'une des revendications précédentes, **caractérisé en ce que** le racleur (7) comporte au moins une ouverture de passage (15).

6. Robot de cuisine (1) selon l'une des revendications précédentes, **caractérisé en ce qu'**il est prévu un couvercle (9) pour couvrir l'espace intermédiaire (4), lequel couvercle (9) peut être fixé de manière immobile en rotation par rapport au récipient (2) et/ou à la cuve (2).

7. Robot de cuisine (1) selon l'une des revendications précédentes, **caractérisé en ce que** le racleur (7) peut être fixé de manière immobile en rotation par rapport au récipient (2) et/ou peut être fixé de manière immobile en rotation au récipient (2) ou au couvercle (9).

8. Robot de cuisine (1) selon l'une des revendications précédentes, **caractérisé en ce qu'**il est prévu un dispositif d'accouplement rotatif (8) qui relie l'outil (5) à la cuve d'insertion (3) de manière immobile en rotation.

9. Robot de cuisine (1) selon l'une des trois revendications précédentes, **caractérisé en ce que** le couvercle (9) présente un palier (16) pour supporter la cuve d'insertion (3) de manière mobile en rotation.

10. Robot de cuisine (1) selon la revendication précédente, **caractérisé en ce qu'**un épaulement circonférentiel (17) de la cuve d'insertion (3) repose sur le palier (16) et/ou le palier (16) s'étend en forme d'anneau ou de segment d'anneau autour d'un axe longitudinal (12) du récipient (2).

11. Robot de cuisine (1) selon l'une des cinq revendications précédentes, **caractérisé en ce que** le couvercle (9) comprend une partie de base (18) pour la réalisation d'un siège d'appui et/ou pour la fixation sur le récipient (2), une partie de raccordement (19) pour la fixation du racleur (7) et/ou un couvercle pour la fermeture d'une ouverture du couvercle (20).

12. Utilisation du robot de cuisine (1) selon l'une des revendications précédentes pour la préparation de chocolat.
